# EUROPÄISCHE PATENTSCHRIFT

(11) **EP 2 553 297 B1**
(45) Veröffentlichungstag und Bekanntmachung des Hinweises auf die Patenterteilung: **09.11.2016**
(21) Anmeldenummer: 10757033.5
(22) Anmeldetag: 11.09.2010
(51) Int. Cl.: F16J 13/12, F16J 15/02, F16J 15/06

(54) **VERSCHLIESSBARER BEHÄLTER**
CLOSABLE CONTAINER
RÉCIPIENT APTE À ÊTRE FERMÉ

(30) Priorität: 29.03.2010 DE 202010004262 U
(43) Veröffentlichungstag der Anmeldung: 06.02.2013
(73) Patentinhaber: Bross, Ewald, 67360 Lingenfeld (DE)
(72) Erfinder: Bross, Ewald, 67360 Lingenfeld (DE)
(74) Vertreter: Kesselhut, Wolf
(86) Internationale Anmeldenummer: PCT/EP2010/005581
(87) Internationale Veröffentlichungsnummer: WO 2011/120545

(56) Entgegenhaltungen:
- BE-A- 676 404
- DE-A1- 3 345 960
- DE-A1- 4 205 442
- DE-U- 9 215 975
- US-A- 2 320 174

## Beschreibung

Die Erfindung betrifft einen verschließbaren Behälter mit den Merkmalen des Oberbegriffs des Anspruchs 1.

Behälter, wie beispielsweise kastenförmige Boxen oder zylinderförmige Tonnen, die durch einen Deckel, der bevorzugt am Behälter verschwenkbar angeordnet sein kann, verschließbar sind, sind aus dem Stand der Technik bekannt und werden verbreitet dazu eingesetzt, Gegenstände jeglicher Art gegen Schmutz, Wasser und die Einwirkung von mechanischen Stößen und Beschädigungen im Innenraum des Behälters aufzunehmen (siehe US-A-2 320 174)

Bei verbreitet zum Einsatz gelangenden Behältern ist nicht nur der jeweilige Deckel nach dem Schließen des Behälters gegen ein unbeabsichtigtes Öffnen zu verriegeln, sondern es ist auch gleichzeitig eine ausreichend hohe Anpresskraft bereitzustellen, so dass der Deckel gegen den Rand des Behälters gedrückt wird. Dabei wird der Rand gegen eine Dichtfläche einer elastischen Dichtung gedrückt, um den Innenraum zuverlässig vor Schmutz und Wasser zu schützen.

Vom Anmelder gefertigte Behälter mit verschwenkbar aufgenommenem Deckel sind unter anderem quaderförmig und gelangen als Aufbewahrungsbehälter an Offroad-Fahrzeugen zum Einsatz. Mit Hilfe einer Hebelriegels wird der Deckel mit einer vorgegebenen Andruckkraft gegen den Behälter gedrängt, um mittels einer zwischen dem Rand des Behälters und dem Deckel angeordneten elastischen Dichtung einen staub- und flüssigkeitsdichten Verschluss des Innenraums zu gewährleisten. Konkret wird eine zwischen dem Deckel und dem Behälterrand angeordnete Dichtung in einer umlaufenden Nut, auch als Kanal bezeichnet, des Deckels aufgenommen. Durch den Rand des Behälters zusammengequetscht, schließt die Dichtung den Innenraum gegenüber dem Außenraum ab.

In der Praxis hat sich jedoch herausgestellt, dass bei starker dauerhafter oder temporärer Kraftbelastung die Dichtung durch den auf diese drückenden Rand des Behälters beschädigt werden kann, so dass der Behälter undicht wird. Auch kann an der Dichtung anstehende Feuchtigkeit in den Innenraum in unerwünschter Weise eindringen, wenn abschnittsweise unterschiedliche Andruckkräfte zwischen Rand und Dichtung herrschen.

Aufgabe der vorliegenden Erfindung ist es daher, einen verschließbaren Behälter zu schaffen, der zuverlässig abgedichtet ist.

Diese Aufgabe wird erfindungsgemäß durch einen verschließbaren Behälter mit den Merkmalen gemäß Anspruch 1 gelöst. Vorteilhafte Weiterbildungen der Erfindung sind in den abhängigen Ansprüchen charakterisiert.

Ein erfindungsgemäß verschließbarer Behälter umfasst einen Deckel, der einen umlaufenden Kanal aufweist, in welchem eine elastische Dichtung angeordnet ist. Bei geschlossenem Deckel stützt sich die Dichtung auf einem umlaufenden Rand des Behälters ab. Der Behälter umfasst des Weiteren einen Hebelriegel zum Verschließen des Deckels unter Erzeugung einer die Dichtung deformierenden Andruckkraft. Erfindungsgemäß weist der die Dichtung abstützende Rand einen zur Außenseite des Behälters wenigstens einmal umgeschlagenen Falzabschnitt auf, der sich lediglich über einen Teil der Höhe des Randes hinweg erstreckt und einen zurückgesetzten Bereich festlegt. In im Wesentlichen horizontaler Lage bildet der Rand einen Kanal zum Ableiten von Feuchtigkeit.

Der Falzabschnitt kann auch mehrfach umgeschlagen sein. Der Behälter kann auch als Behältnis, Tonne oder Box bezeichnet werden. Der Behälter ist bevorzugt aus einem metallenen Werkstoff, beispielsweise Aluminium, gefertigt. In vorteilhafter Weise weist der umgeschlagene Rand zur Dichtung eine vergleichsweise breitere Anlagefläche auf, so dass die auf die Dichtung einwirkende Andruckkraft einen geringeren Druck auf die Dichtung unter Vermeidung von Beschädigungen der Dichtung ausübt. Die im Kanal zwischen Wänden aufgenommene Dichtung ist auch gegen Beschädigungen beim Beladen oder Entladen des Behälters durch Gegenstände geschützt. Der umgeschlagene Falzabschnitt bildet auf der der Dichtung abgewandten Seite einen Kanal parallel zum Verlauf des Randes aus, so dass in diesem Feuchtigkeit gesammelt und abgeleitet wird, ohne die Dichtung selbst zu erreichen.

Um die Festigkeit des verschließbaren Behälters ohne zusätzlichen Materialaufwand weiter zu erhöhen, ist es in bevorzugten Ausführungsformen der Erfindung vorgesehen, dass wenigstens eine Wand, bevorzugt beide Wände, des die elastische Dichtung aufnehmenden Kanals zur Dichtung hin umgefalzt ist beziehungsweise sind. In diesem Sinne wird ein Doppelfalz gebildet, wodurch mit vergleichsweise geringen Kosten eine sehr hohe Materialstärke am Kanal des Deckels erhalten wird. Dadurch können Deformationen der Kanalwände durch im Innenraum umherfliegende Gegenstände vermieden werden.

In einer Reihe von vorteilhaften Ausführungsformen des erfindungsgemäßen verschließbaren Behälters wird die Festigkeit ohne zusätzlichen Materialaufwand des Weiteren dadurch erhöht, dass die sich auf der Seite des Innenraums des Behälters befindende Wand des die elastische Dichtung aufnehmenden Kanals in Richtung des Innenraums abgekantet ist. Dieser abgekantete, bevorzugt senkrecht zur Wand des Kanals verlaufende Vorsprung - der nachfolgend auch als Verstärkungsabschnitt bezeichnet wird - bewirkt eine weitere Stabilisierung und schützt die Dichtung und den gegen diese gedrückten Rand vor einer Beschädigung durch Gegenstände, die sich ungesichert im Innenraum des Behälters bewegen.

Darüber hinaus ist es bei einer bevorzugten Ausführungsform des erfindungsgemäß verschließbaren Behälters vorgesehen, den Hebelriegel, insbesondere nebst der zugehörigen Verriegelungsvorrichtung, außerhalb der Außenkontur des vom Behälter und vom Deckel umschlossenen Raumes oder außerhalb des Dichtbereich des Behälters liegend vorzusehen. Auf diese vorteilhafte Weise bietet der Hebelriegel beziehungsweise die Verriegelungsvorrichtung keinen Verbindungsweg von außen in den Innenraum des Behälters, auf welchem Feuchtigkeit ins Innere des Behälters gelangen kann.

In einer vorteilhaften Weiterentwicklung des verschließbaren Behälters kann es, um eine zusätzliche Sicherheit für die Dichtheit des Behälters zu erhalten oder um diesen bereits bei der Herstellung auf Dichtigkeit hin zu überprüfen, vorgesehen sein, dass der verschließbare Behälter wenigstens ein Ventil zur Beaufschlagung des Innenraums des mit dem Deckel verschlossenen Behälters mit Überdruck oder mit Unterdruck aufweist. Konkret kann das Ventil ein herkömmliches kostengünstiges Autoventil sein, so dass eine praktische Druckbeaufschlagung mittels eines weit verbreiteten und einfach zugänglichen Autoreifenluftbefüllungsgeräts (insbesondere kombiniert mit einem Reifendruckmesser) mit geringem Aufwand möglich ist. Der Druck im Innenraum kann durch ein entsprechendes Manometer über einen bestimmten oder vorgegebenen Zeitraum hinweg geprüft werden. Beispielsweise kann der Überdruck 100 Millibar betragen.

In diesem Zusammenhang ist es bedeutsam, dass für den Fall des Überdrucks im Innenraum kein Überdruckventil erforderlich ist. Anders gesagt, die Weiterentwicklungen des erfindungsgemäß verschließbaren Behälters können überdruckventillos oder ohne Überdruckventil sein. Konkret wird bei einem Behälter mit einer Länge von etwa 1,9 Meter der Deckel bei einem Überdruck von 0,1 bis 0,3 Bar derart ausreichend deformiert, dass der Deckel abhebt und der Überdruck automatisch entweichen kann.

Bezüglich der Beaufschlagung mit Überdruck ergibt sich insbesondere der Vorteil, dass bei Wasserdurchfahren eines Fahrzeugs, an dessen Außenseite ein erfindungsgemäßer Behälter befestigt ist, die Gefahr des Eindringens von Feuchtigkeit in den Innenraum weiter verringert werden kann. Dagegen kann ein mit Unterdruck beaufschlagter erfindungsgemäßer Behälter in vorteilhafter Weise zur Aufnahme von verderblicher Ware oder von empfindlichen Messgeräten dienen. Des Weiteren ist auch die Beaufschlagung mit Stickstoff oder einem anderen Inertgas möglich. Eine derartige Gasfüllung ist insbesondere zur Verringerung der Explosionsgefahr beim Transport von entzündlichen Stoffen vorteilhaft.

In einer Gruppe von Ausführungsformen des erfindungsgemäßen verschließbaren Behälters kommt eine Vorrichtung zur Verriegelung wenigstens mit den folgenden Merkmalen zum Einsatz. In diesen Ausführungsformen ist der Hebelriegel in einem Gehäuse verschwenkbar gelagert ist. An seinem ersten Ende weist der Hebelriegel einen Handgriff zum Verschwenken des Hebels aus einer ersten Verriegelungsstellung in eine zweite Freigabestellung auf, und an seinem zweiten Ende weist der Hebelriegel wenigstens ein hakenförmiges Eingriffsmittel auf, welches in der ersten Verriegelungsstellung einen behältnisseitigen Vorsprung derart hintergreift, dass der Deckel mit einer vorgegebenen Andruckkraft gegen den Behälter gedrängt wird. Des Weiteren weist der Behälter ein Sperrelement auf, das den Hebelriegel in der ersten Verriegelungsstellung gegen ein Verschwenken in die zweite Freigabestellung sperrt.

Besonders bevorzugt ist in dieser Gruppe von Ausführungsformen, wenn der Hebelriegel eine Steuerkurve mit einem zurückgenommenen Kurvenabschnitt aufweist, die mit einem sich am Gehäuse abstützenden Kurvenfolger zusammenwirkt, welcher den Hebel nach dem Verschwenken aus der Verriegelungsstellung mit einem der Schwenkbewegung entgegen gerichteten Haltemoment derart beaufschlagt, dass der Hebelriegel in einer zwischen der Verriegelungsstellung und der Freigabestellung gelegenen dritten Zwischenstellung arretiert wird. Des Weiteren oder alternativ dazu kann der Hebelriegel ein sich am Gehäuse abstützendes federelastisches Mittel zum Drängen des Hebelriegels in die Freigabestellung aufweisen.

Eine Vorrichtung zur Verriegelung eines durch einen Deckel verschließbaren Behälters mit derartigen Merkmalen ist in der eingereichten deutschen Patentanmeldung DE 10 2009 041 803.2 vom 18. September 2009 detailliert beschrieben und offenbart. Der gesamte Offenbarungsgehalt des Dokuments DE 10 2009 041 803.2 wird hiermit vollständig durch explizite Bezugnahme in die Offenbarung dieser Anmeldung aufgenommen. Mit anderen Worten, für den durch die vorliegende Anmeldung angesprochenen Fachmann ist klar, dass ein erfindungsgemäßer verschließbarer Behälter eines, mehrere (in unterschiedlichen Kombinationen) oder alle im Dokument DE 10 2009 041 803.2 beschriebenen Merkmale aufweisen kann und sieht die im referenzierten Dokument beschriebenen Merkmale als jeweils optional zur Erfindung zugehörig.

Im Zusammenhang mit der Erfindung steht auch eine elastische Dichtung für einen verschließbaren Behälter mit einem, mehreren oder allen Merkmalen gemäß dieser Darstellung. Die erfindungsgemäße elastische Dichtung hat einen im Wesentlichen rechteckigen Querschnitt senkrecht zur Umlaufrichtung des aufnehmenden Kanals. Sie besteht aus einem geschlossenzelligen EPDM-Zellkautschuk. Im verbreiteten Sprachgebrauch wird ein derartiger Zellkautschuk auch als Moosgummi bezeichnet, obgleich dieses ein offenzelliger elastischer Schaumstoff ist. EPDM ist eine Abkürzung für Ethylen-Propylen-Dien-Kautschuk, das ein terpolymeres Elastomer ist. Dieser Werkstoff eignet sich besonders gut für Außenanwendungen, insbesondere unter Temperaturschwankungen und Feuchtigkeitsexposition. Alternativ zu EPDM kann auch ein Zellkautschuk aus einem Naturkautschuk, einem Neopren, einem Chloropren, einem Nitril oder einem Perbunan verwendet werden. Erfindungsgemäß weist die elastische Dichtung im Inneren wenigstens zwei symmetrisch zum Mittelpunkt der Fläche des Querschnitts angeordnete Längsausnehmungen auf. Bevorzugt ist darüber hinaus, dass die elastische Dichtung vier Längsausnehmungen mit jeweils kreisförmigem Querschnitt (insbesondere Bohrungen) aufweist, wobei jeweils zwei der Längsausnehmungen sich paarweise symmetrisch zum Mittelpunkt gegenüberliegen. Auf diese Weise wird eine der Verwendung in einem erfindungsgemäßen verschließbaren Behälter mit adaptierter Elastizität der elastischen Dichtung erreicht. Die elastische Dichtung wird bevorzugt im Endlosverfahren als Strangpressbäuteil gefertigt.

Weitere Vorteile und vorteilhafte Ausführungsformen und Weiterbildungen der Erfindung werden anhand der nachfolgenden Beschreibung unter Bezugnahme auf die Figuren dargestellt. In den Zeichnungen zeigen:
- Figur 1: eine ausschnittsweise Querschnittsansicht eines erfindungsgemäßen verschließbaren Behälters,
- Figur 2: eine schematische Querschnitts Darstellung einer erfindungsgemäßen elastischen Dichtung, und
- Figur 3: eine schematische Querschnittsansicht einer weiteren Ausführungsform des Behälters, bei dem die Wände des Kanals sowie der Verstärkungsabschnitt und ein weiterer Wandabschnitt als integraler Bestandteil eines einteiligen Blechs geformt sind.

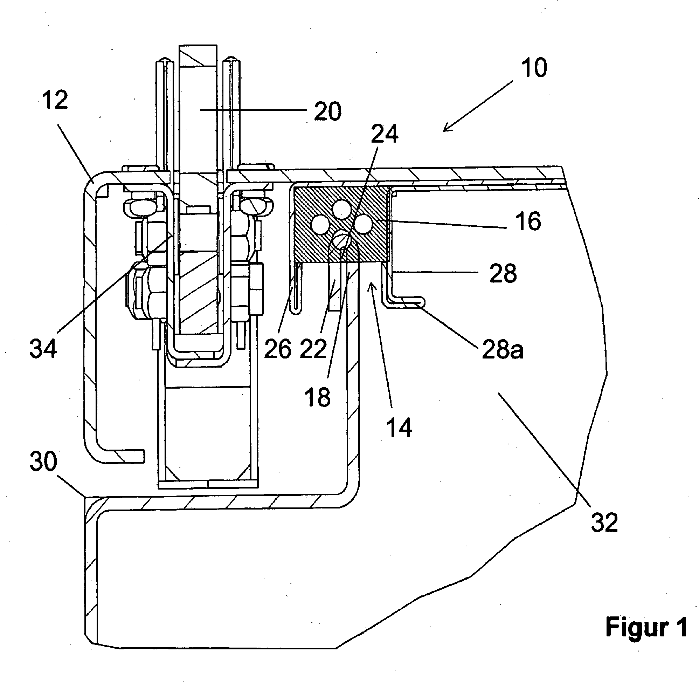

Die Figur 1 zeigt einen Ausschnitt einer bevorzugten Ausführungsform eines erfindungsgemäßen verschließbaren Behälters 10 mit einem verschwenkbar angebrachten Deckel 12. Der Behälter 10 ist aus Aluminiumblech gefertigt. An der Innenseite des Deckels 12 weist der verschließbare Behälter 10 einen umlaufenden Kanal 14 auf. In diesem Kanal 14 ist eine elastische Dichtung 16 aufgenommen. Wird der Behälter 10 geschlossen, drückt der umlaufende Rand 18 auf die Oberfläche der elastischen Dichtung 16, welche sich unter Kompression an den Verlauf des Randes 18 anschmiegt. Die elastische Dichtung 16 wird reversibel verformt. Sie ist insbesondere mehrfach reversibel verformbar. Der Rand 18 ist umgebogen oder umgeschlagen und weist einen zur Außenseite hin umgeschlagenen Falzabschnitt 22 auf, derart, dass der Rand 18 gegenüber der elastischen Dichtung 16 einen in etwa U-förmigen Verlauf besitzt. Auf diese Weise wird die Kontaktfläche des Randes 18 mit der Dichtung 16 in vorteilhafter Weise vergrößert. Gleichzeitig wird dadurch auf der Außenseite ein zurückgesetzter Bereich 24, eine Tasche gebildet. Dieser zurückgesetzte Bereich 24 kann als ein Kanal zum Ableiten von Flüssigkeiten, insbesondere Wasser dienen, der einen unmittelbaren Kontakt der Flüssigkeit mit der elastischen Dichtung 16 verhindert, wenn der Behälter 10 über einen längeren Zeitraum hinweg in einer gekippten Lage positioniert wird, in der sich der Deckel in vertikaler Richtung erstreckt.

Bei der bevorzugten Ausführungsform der Erfindung sind auch die Aluminiumbleche, aus denen die Wände 26, 28 des die elastische Dichtung 16 aufnehmenden Kanals 14 gefertigt sind, in Richtung zur elastischen Dichtung 16 hin ins Innere des Kanals 14 hinein umgefalzt. Dadurch entstehen Vorsprünge oder Anschläge, durch die die bevorzugt mit einem geringen Übermaß gefertigte elastische Dichtung 16 nach den Eindrücken in den Kanal automatisch im Kanal 14 fixiert wird. Mit anderen Worten halten die Aluminiumbleche der Wände 26, 28 die elastische Dichtung 16 im Kanal 14 und verhindern, dass die Dichtung beim Öffnen des Deckels aus dem Kanal herausgezogen wird, wenn die Dichtung und der Rand 18 bei geschlossenem Deckel beispielsweise infolge von Schmutzeinwirkung miteinander verkleben. Die elastische Dichtung 16 kann jedoch ebenfalls in den Kanal 14 eingeklebt sein.

Des Weiteren ist die Wand 28 auf der Seite des Innenraums 32 des Behälters 10 in Richtung des Innenraums 32 in einem in etwa rechten Winkel abgekantet, derart, dass ein Verstärkungsabschnitt 28a definiert wird, der eine zusätzliche Stabilität und einen zusätzlichen Schutz des Kanals 14 gegen Beschädigungen durch sich im Innenraum 32 bewegende Ladungsgegenstände bietet.

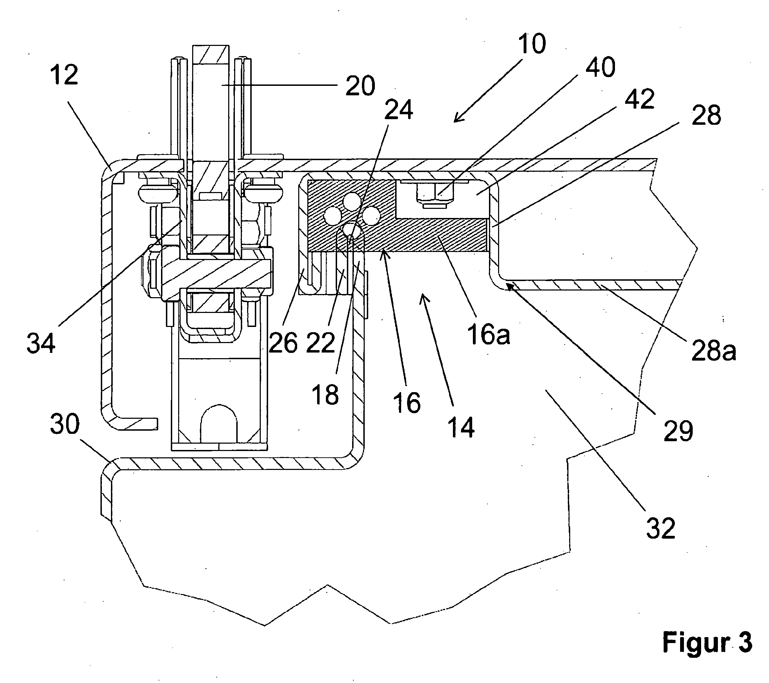

Gemäß einer weiteren, in Fig. 3 gezeigte Ausführungsform der Erfindung, die einen nochmals verbesserten Schutz des Kanals gegen Beschädigungen sowie einen Deckel mit einer erhöhten Steifigkeit, insbesondere Torsionssteifigkeit, bietet, erstreckt sich der Verstärkungsabschnitt 28a über die gesamte Innenseite des Deckels 12 hinweg bis zur Wand 28 des umlaufenden Kanals 14 auf der dem Hebelriegel 12 gegenüberliegenden Seite des Deckels 12, die in Figur 3 nicht gezeigt ist. Die beiden umlaufenden Wände 26, 28 und der Verstärkungsabschnitt 28a sind bei dieser Ausführungsform der Erfindung bevorzugt an einem insbesondere durchgängigen einteiligen Blech 29 geformt, das insbesondere durch Formbiegen eines anfänglich ebenen Metallblechs erhalten wird und an der Innenseite des Deckels 12 befestigt ist.

Die Befestigung des Blechs 29 am Deckel 12 erfolg vorzugsweise mit Hilfe von Klebstoff und/oder durch Schraubverbindungen 40, die im umlaufenden Kanal 14 angeordnet sind.

Wie der Darstellung von Fig. 3 hierbei im Detail entnommen werden kann, befinden sich die Schraubverbindungen 40 gegen Schmutz und Feuchtigkeit geschützt in einer Aussparung 42 der Dichtung 16. Der Kanal 14 ist hierzu in Richtung parallel zur Deckelinnenseite verbreitert, und die Dichtung 16 besitzt seitlich des Auflagebereichs der Kante 24 einen geschlossenen vorstehenden Abschnitt 16a, der sich bis an die Wand 28 heran erstreckt und die jeweilige Schraubverbindung 40 überdeckt.

Die in Fig. 3 gezeigte Ausführungsform der Erfindung besitzt den Vorteil, dass sich der Kanal 14 mit den Wänden 26 und 28 und dem Verstärkungsabschnitt 28a sehr kostengünstig als ein integrales gebogenes Blechbauteil herstellen lässt, welches auf der Innenseite des Deckels 12 mit geringem Aufwand montiert werden kann. Hierdurch lassen sich die Kosten für die eingesetzten Bauteile sowie auch die Montagekosten für den erfindungsgemäßen Behälter 10 in vorteilhafter Weise senken.

Ein weiterer Vorteil der in Fig. 3 gezeigten Ausführungsform der Erfindung besteht darin, dass sich durch die doppelwandartige Ausgestaltung des Verstärkungsabschnitts 28a, der die umlaufende Wand 28 vollständig überspannt, eine doppelwandige Konstruktion des Deckels 12 ergibt, durch die aufgrund des zwischen der Innenseite des Deckels 12 und dem Verstärkungsabschnitt 28a gebildeten Hohlraums die thermische Isolation sowie auch die Schallisolation des Innenraums verbessert wird. Zudem wird Feuchtigkeit, die sich bei aufgeklapptem Deckel auf der Innenseite des Verstärkungsabschnitts 28a sammelt, beim Verschließen des Deckels entlang dem Verstärkungsabschnitt 28a in den Kanal 14 abgeleitet, ohne sich im Bereich des Innenraums zu sammeln, wenn der Deckel 12 zum Verschließen des Behälters 10 in die horizontale Stellung verschwenkt wird.

Ferner wird der Schutz des Kanals 14 und der Dichtung 16, 16a gegenüber Beschädigungen durch lose im Innenraum des Behälters 10 aufgenommene Gegenstände, wie z.B. Wagenheber etc., zusätzlich verbessert, da durch den kantenlosen Übergang zwischen dem Rand der Wand 28 und dem großflächigen Verstärkungsabschnitt 28a kein Vorsprung mehr besteht, an dem die Gegenstände anschlagen könnten.

Aus der Figur 1 und 3 ist erkennbar, dass der im Deckel 12 aufgenommene Hebelriegel 20 außerhalb der Außenkontur 30 des abgedichteten Bereichs des Innenraums 32 angeordnet ist. Der Hebelriegel 20 liegt in einem Gehäuse 34, das über einen Montageflansch mittels Schrauben oder Nieten am Deckel 12, bevorzugt zwischen der Deckelaußenkante und der äußeren Wand 28 des Kanals 14, befestigt ist. Die konkrete Funktionsweise eines derartigen Verriegelungsmechanismus ist in der deutschen Patentanmeldung DE 10 2009 041 803.2 , dessen Offenbarungsgehalt vollständig in diese Darstellung einbezogen ist, beschrieben.

Der Deckel 12 weist einen abgewinkelten Randabschnitt mit einer nach innen umgeschlagenen Krempe auf, der das Gehäuse 34 seitlich verdeckt oder verkleidet. Auf diese Weise ist ein schützender, obgleich nicht notwendigerweise auch vollständig schmutzdichter oder wasserdichter Raumbereich geschaffen, in welchem die Vorrichtung zur Verriegelung des verschließbaren Behälters 10 sowie der Außenbereich der elastischen Dichtung 16 liegen.

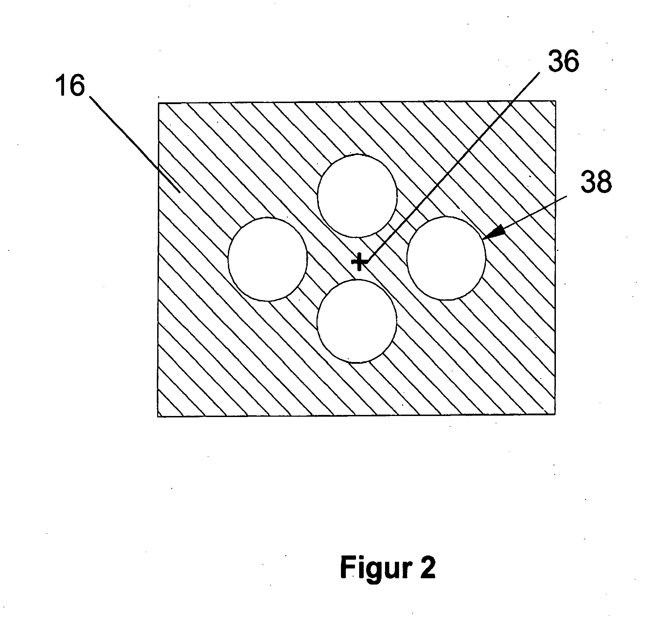

Die Figur 2 ist eine schematische Darstellung eines Querschnitts durch eine vorteilhafte und bevorzugte Ausführungsform einer erfindungsgemäßen elastischen Dichtung 16. Die aus EPDM-Zellkautschuk bestehende Dichtung 16 hat einen im Wesentlichen rechteckigen Querschnitt. Im Inneren der Dichtung 16 sind in dieser Ausführungsform vier paarweise symmetrisch zum Mittelpunkt 36 angeordnete, kreisförmige Längsausnehmungen 38 vorhanden. Auf diese Weise erhält die Dichtung 16 eine bestimmte Elastizität oder Kompressibilität, die auf die gewünschte Anwendung als Dichtung 16 eines verschließbaren Behälters 10 abgestimmt ist. Beispielweise sind in einer elastischen Dichtung 16 aus EPDM mit den Querschnittmaßen 15,0 mm x 20,0 mm Bohrungen mit einem Durchmesser von 4,0 mm eingebracht. Die Dichtung 16 kann dadurch in vorteilhafter Weise als endloses Strangpressprofil hergestellt werden.

### BEZUGSZEICHENLISTE

- 10: verschließbarer Behälter
- 12: Deckel
- 14: Kanal
- 16: elastische Dichtung
- 16a: vorstehender Abschnitt
- 18: umlaufender Rand
- 20: Hebelriegel
- 22: umgeschlagener Falzabschnitt
- 24: zurückgesetzter Bereich
- 26: Wand
- 28: Wand auf der Seite des Innenraums
- 28a: Verstärkungsabschnitt
- 29: S-förmig gebogenes Blech
- 30: Außenkontur
- 32: Innenraum
- 34: Gehäuse
- 36: Mittelpunkt
- 38: Längsausnehmung
- 40: Schraubverbindung
- 42: Aussparung

## Patentansprüche

1. Verschließbarer Behälter (10) mit einem Deckel (12), der einen umlaufenden Kanal (14) aufweist, in dem eine elastische Dichtung (16) angeordnet ist, wobei sich bei geschlossenem Deckel (12) die Dichtung (16) auf einem umlaufenden Rand (18) des Behälters (10) abstützt, und mit einem Hebelriegel (20) zum Verschließen des Deckels (12) unter Erzeugung einer die Dichtung (16) deformierenden Andruckkraft, wobei der die Dichtung (16) abstützende Rand (18) einen zur Außenseite des Behälters (10) wenigstens einmal umgeschlagenen Falzabschnitt (22) aufweist, der sich lediglich über einen Teil der Höhe des Randes (18) hinweg erstreckt und einen zurückgesetzten Bereich (24) festlegt, der bei im Wesentlichen horizontaler Lage des Randes (18) einen Kanal zum Ableiten von Feuchtigkeit bildet, und wobei die sich auf der Seite des Innenraums (32) des Behälters (10) befindende Wand (28) des die elastische Dichtung (16) aufnehmenden Kanals (14) in Richtung des Innenraums (32) abgekantet ist und einen Verstärkungsabschnitt (28a) definiert, der sich über die gesamte Innenseite des Deckels (12) hinweg bis zur Wand (28) des umlaufenden Kanals (14) auf der dem Hebelriegel (12) gegenüberliegenden Seite des Deckels (12) erstreckt,
**dadurch gekennzeichnet,**
**dass** die beiden Wände (26, 28) und der Verstärkungsabschnitt (28a) an einem insbesondere durchgängigen Blech (29) geformt sind, das an der Innenseite des Deckels (12) befestigt ist.

2. Verschließbarer Behälter gemäß Anspruch 1,
**dadurch gekennzeichnet,**
**dass** wenigstens eine Wand (26, 28) des die elastische Dichtung (16) aufnehmenden Kanals (14) zur Dichtung (16) hin umgefalzt ist.

3. Verschließbarer Behälter gemäß Anspruch 1 oder 2,
**dadurch gekennzeichnet,**
**dass** das Blech (29) am Deckel mit Hilfe von Klebstoff und/oder durch Schraubverbindungen (40) befestigt ist, die im umlaufenden Kanal (14) angeordnet sind.

4. Verschließbarer Behälter gemäß einem der vorstehenden Ansprüche,
**dadurch gekennzeichnet,**
**dass** der Hebelriegel (20) außerhalb der Außenkontur (30) des vom Behälter (10) und vom Deckel (12) umschlossenen Raumes liegt.

5. Verschließbarer Behälter gemäß einem der vorstehenden Ansprüche,
**dadurch gekennzeichnet,**
**dass** der Behälter (10) wenigstens ein Ventil zur Beaufschlagung des Innenraums (32) des mit dem Deckel (12) verschlossenen Behälters (10) mit Überdruck oder mit Unterdruck aufweist.

6. Verschließbarer Behälter gemäß einem der vorstehenden Ansprüche,
**dadurch gekennzeichnet,**
**dass** der Hebelriegel (20) in einem Gehäuse (34) verschwenkbar gelagert ist, an seinem ersten Ende einen Handgriff zum Verschwenken des Hebels (20) aus einer ersten Verriegelungsstellung in eine zweite Freigabestellung aufweist und an seinem zweiten Ende wenigstens ein hakenförmiges Eingriffsmittel besitzt, welches in der ersten Verriegelungsstellung einen behältnisseitigen Vorsprung derart hintergreift, dass der Deckel (12) mit einer vorgegebenen Andruckkraft gegen den Behälter (10) gedrängt wird, und dass der Behälter (10) ein Sperrelement aufweist, das den Hebelriegel (20) in der ersten Verriegelungsstellung gegen ein Verschwenken in die zweite Freigabestellung sperrt.

7. Verschließbarer Behälter gemäß Anspruch 6,
**dadurch gekennzeichnet,**
**dass** der Hebelriegel (20) eine Steuerkurve mit einem zurückgenommenen Kurvenabschnitt aufweist, die mit einem sich am Gehäuse (34) abstützenden Kurvenfolger zusammenwirkt, welcher den Hebel (20) nach dem Verschwenken aus der Verriegelungsstellung mit einem der Schwenkbewegung entgegen gerichteten Haltemoment derart beaufschlagt, dass der Hebelriegel (20) in einer zwischen der Verriegelungsstellung und der Freigabestellung gelegenen dritten Zwischenstellung arretiert wird.

8. Verschließbarer Behälter gemäß Anspruch 6 oder 7,
**dadurch gekennzeichnet,**
**dass** der Hebelriegel (20) ein sich am Gehäuse (34) abstützendes federelastisches Mittel aufweist, welches den Hebelriegel (20) in die Freigabestellung drängt.

9. Elastische Dichtung (16) für einen verschließbaren Behälter (10) gemäß einem der vorstehenden Ansprüche, mit einem im Wesentlichen rechteckigen Querschnitt senkrecht zur Umlaufrichtung des aufnehmenden Kanals (14) und aus einem geschlossenzelligen EPDM-Zellkautschuk,
**dadurch gekennzeichnet,**
**dass** die elastische Dichtung (16) im Inneren wenigstens zwei symmetrisch zum Mittelpunkt (36) der Fläche des Querschnitts angeordnete Längsausnehmungen (38) aufweist.

10. Elastische Dichtung gemäß Anspruch 9,
**dadurch gekennzeichnet,**
**dass** die elastische Dichtung (16) vier Längsausnehmungen (38) mit jeweils kreisförmigem Querschnitt aufweist, wobei jeweils zwei der Längsausnehmungen (38)
sich paarweise symmetrisch zum Mittelpunkt (36) gegenüberliegen.

11. Elastische Dichtung gemäß Anspruch 3 und 9,
**dadurch gekennzeichnet,**
**dass** die Dichtung (16) im Bereich der Schraubverbindung (40) eine Aussparung (42) aufweist, in welcher die Schraubverbindung (40) gegen Schmutz und Feuchtigkeit geschützt aufgenommen ist.

## Claims

1. Closable container (10) with a lid (12), comprising a circumferential channel (14) in which an elastic seal (16) is arranged, wherein the seal (16) is supported on a circumferential edge (18) of the container (10) when the lid (12) is closed, and with a lever bolt (20) for closing the lid (12) whilst generating a contact pressure deforming the seal (16), wherein the edge (18) supporting the seal (16) comprises a folding section (22) folded at least once towards the outside of the container (10), which extends only across a part of the height of the edge (18) and defines a recessed area (24) that forms a channel for draining moisture in a substantially horizontal position of the edge (18), and wherein the wall (28) of the channel (14) receiving the elastic seal (16) located on the side of the interior (32) of the container (10) is chamfered in the direction of the interior (32) and defines a reinforcing section (28a) that extends across the entire inside of the lid (12) up to the wall (28) of the circumferential channel (14) on the side of the lid (12) opposite the lever bolt (12),
**characterised in that**
the two walls (26, 28) and the reinforcing section (28a) are formed on an, in particular continuous, metal sheet (29) fitted to the inside of the lid (12).

2. Closable container according to claim 1,
**characterised in that**
at least one wall (26, 28) of the channel (14) receiving the elastic seal (16) is folded towards the seal (16).

3. Closable container according to claim 1 or 2,
**characterised in that**
the metal sheet (29) is fitted to the lid with the aid of adhesive and/or by means of screw connections (40) arranged in the circumferential channel (14)

4. Closable container according to one of the preceding claims,
**characterised in that**
the lever bolt (20) lies outside of the outer contour (30) of the space enclosed by the container (10) and the lid (12).

5. Closable container according to one of the preceding claims,
**characterised in that**
the container (10) comprises at least one valve for applying overpressure or underpressure to the interior (32) of the container (10) closed with the lid (12).

6. Closable container according to one of the preceding claims,
**characterised in that**
the lever bolt (20) is mounted in a housing (34) and can swivel, comprises a handle for swivelling the lever (20) from a first locking position into a second release position at its first end, and has at least one hook-shaped engagement means at its second end that engages behind a container-side projection in the first locking position in such a way that the lid (12) is forced against the container (10) with a predetermined contact pressure, and that the container (10) comprises a locking element that locks the lever bolt (20) in a first locking position against swivelling into the second release position.

7. Closable container according to claim 6,
**characterised in that**
the lever bolt (20) comprises a control curve with a retracted curve section that cooperates with a curve follower supported on the housing (34), which acts on the lever (20) after swivelling from the locking position with a holding torque directed against the swivel movement in such a way that the lever bolt (20) is arrested in a third interim position that lies between the locking position and the release position.

8. Closable container according to claim 6 or 7,
**characterised in that**
the lever bolt (20) comprises a spring elastic means supported on the housing (34), which forces the lever bolt (20) into the release position.

9. Elastic seal (16) for a closable container (10) according to one of the preceding claims, with a substantially rectangular cross-section vertical to the circumferential direction of the receiving channel (14), made from a closed cell EPDM cellular rubber,
**characterised in that**
the elastic seal (16) comprises at least two longitudinal recesses (38) arranged symmetrically to the centre (36) of the area of the cross-section in its interior.

10. Elastic seal according to claim 9,
**characterised in that**
the elastic seal (16) comprises four longitudinal recesses (38), each with a circular cross-section, wherein two of the longitudinal recesses (38) oppose each other in pairs symmetrically to the centre (36).

11. Elastic seal according to claim 3 und 9,
**characterised in that**
the seal (16) comprises a notch (42) in the area of the screw connection (40), into which the screw connection (40) is received and protected against dirt and moisture.

## Revendications

1. Récipient (10) apte à être fermé, comportant un couvercle (12) qui présente un canal périphérique (14) dans lequel est agencé un joint élastique (16), le joint (16) prenant appui sur un bord périphérique (18) du récipient (10) lorsque le couvercle (12) est fermé, et comportant un loquet à levier (20) pour fermer le couvercle (12) en générant une force de pression qui déforme le joint (16), le bord (18) qui supporte le joint (16) présentant une portion de pliage (22) repliée au moins une fois vers l'extérieur du récipient (10), laquelle s'étend uniquement sur une partie de la hauteur du bord (18) et détermine une partie en retrait (24) qui, en position sensiblement horizontale du bord (18), forme un canal d'évacuation de l'humidité, et la paroi (28) du canal (14) logeant le joint élastique (16), laquelle se trouve du côté de l'espace intérieur (32) du récipient (10), étant pliée en direction de l'espace intérieur (32) et définissant une portion de renforcement (28a) qui s'étend sur l'ensemble de la face intérieure du couvercle (12) jusqu'à la paroi (28) du canal périphérique (14) sur le côté du couvercle (12) en vis-à-vis du loquet à levier (12), **caractérisé en ce que** les deux parois (26; 28) et la portion de renforcement (28a) sont formées sur une tôle (29) notamment continue qui est fixée sur la face intérieure du couvercle (12).

2. Récipient apte à être fermé selon la revendication 1, **caractérisé en ce qu'**au moins une paroi (26, 28) du canal (14) logeant le joint élastique (16) est repliée en direction du joint (16).

3. Récipient apte à être fermé selon la revendication 1 ou 2, **caractérisé en ce que** la tôle (29) est fixée au couvercle à l'aide de colle et/ou de liaisons par vissage (40) situées dans le canal périphérique (14).

4. Récipient apte à être fermé selon l'une des revendications précédentes, **caractérisé en ce que** le loquet à levier (20) se trouve en dehors du contour extérieur (30) de l'espace entouré par le récipient (10) et par le couvercle (12).

5. Récipient apte à être fermé selon l'une des revendications précédentes, **caractérisé en ce que** le récipient (10) comporte au moins une soupape d'alimentation de l'espace intérieur (32) du récipient (10) fermé par le couvercle (12) en surpression ou en pression négative.

6. Récipient apte à être fermé selon l'une des revendications précédentes, **caractérisé en ce que** le loquet à levier (20) est logé pivotant dans un boîtier (34), **en ce qu'**il présente, en sa première extrémité, une poignée pour faire pivoter le levier (20) d'une première position de verrouillage dans une deuxième position de déblocage et **en ce qu'**il comporte, en sa deuxième extrémité, au moins un moyen d'engagement en forme de crochet qui, dans la première position de verrouillage, vient en prise par l'arrière dans une saillie située du côté du récipient de manière telle que le couvercle (12) est poussé contre le boîtier (10) avec une force de pression prédéterminée, et **en ce que** le récipient (10) comporte un élément de blocage qui empêche le loquet à levier (20), dans la première position de verrouillage, de pivoter dans la deuxième position de déblocage.

7. Récipient apte à être fermé selon la revendication 6, **caractérisé en ce que** le loquet à levier (20) comporte une came de commande avec un segment de came en retrait qui coopère avec un suiveur de came qui prend appui sur le boîtier (34) et qui impose au levier (20), après le pivotement hors de la position de verrouillage, un couple de maintien allant à l'encontre du mouvement pivotant de telle sorte que le loquet à levier (20) est immobilisé dans une troisième position intermédiaire entre la position de verrouillage et la position de déblocage.

8. Récipient apte à être fermé selon la revendication 6 ou 7, **caractérisé en ce que** le loquet à levier (20) comporte un moyen élastique qui prend appui sur le boîtier (34) et qui pousse le loquet à levier (20) dans la position de déblocage.

9. Joint élastique (16) pour un récipient (10) apte à être fermé selon l'une des revendications précédentes, présentant une section essentiellement rectangulaire perpendiculairement au sens périphérique du canal (14) de logement et réalisé en un caoutchouc cellulaire EPDM à cellules fermées, **caractérisé en ce que** le joint élastique (16) comporte, en son intérieur, au moins deux évidements longitudinaux (38) symétriques par rapport au point central (36) de la surface de la section.

10. Joint élastique selon la revendication 9, **caractérisé en ce que** le joint élastique (16) comporte quatre évidements longitudinaux (38) présentant respectivement une section circulaire, respectivement deux des évidements longitudinaux (38) se faisant vis-à-vis par paire symétriquement par rapport au point central (36).

11. Joint élastique selon la revendication 3 et 9, **caractérisé en ce que** le joint (16) présente, dans la zone de la liaison par vissage (40), un évidement dans lequel la liaison par vissage (40) est logée de manière protégée contre les salissures et l'humidité.
